# EUROPEAN PATENT APPLICATION

(11) **EP 1 051 022 A2**
(43) Date of publication of application: **08.11.2000**
(21) Application number: 00303820.5
(22) Date of filing: 05.05.2000
(51) Int. Cl.: H04N 1/053

(54) **Clock signal generator**

(30) Priority: 07.05.1999 GB 9910446
(71) Applicant: Synectix Limited, Cheltenham, Glos GL52 6QP (GB)
(72) Inventor: Craig, Ian Roderick, Cheltenham, Glos GL52 4QG (GB)
(74) Representative: Newell, William Joseph

(57) **Abstract**

A synchroniser unit is provided for use in synchronising source image data with a scanning mechanism. The synchroniser unit receives a master clock signal and generates a plurality of tap signals delayed with respect to the master. One of the tap signals closest to or in synchronisation with a reference pulse transmitted by the image scanning mechanism is selected. The selection involves scanning the tap signals for the signal with a first rising edge transition. Analyser logic performing the selection then counts a predetermined number of cycles of the master clock signal before transmitting a selection code. Two delay counters are included to count the predetermined number of cycles from opposite phases of the master clock signal. The synchroniser outputs an imaging clock signal intended to synchronise the image data with the scanning mechanism to produce an accurate image.

## Description

The present invention relates to generating clock signals, and in particular to generating clock signals to be used for synchronising image data to image scanning systems.

Image scanning systems may be used to digitise images placed on the scanner or for producing physical representations of images stored as digital data. In known scanning systems, the scanning mechanism operates independently of the source of image data. The scanning mechanism begins scanning the image at a predetermined point. In a line scan system, where the physical image is generated by a raster, this point is normally the start of every scan line in the image.

The scanning mechanism generates a reference pulse, or a series of reference pulses, to mark the predetermined point in the image. In order that an accurate image is generated, the reference pulse should be synchronised with the head of the scanning mechanism as it passes over the predetermined point so that the correct image data element representing the physical image element to be output at the point is used.

Errors in this synchronisation can result in displacement of image elements, called "jitter", which can cause visible artefacts and image corruption. Thus, the accuracy of the synchronisation is a critical factor in determining the quality of the image produced by the scanning mechanism. Obviously, a scanning mechanism which produces distorted images will not be acceptable, so the problem of synchronising the scanning mechanism with the image data is a primary concern to scanner system manufacturers and users.

US Patent 5,014,137 describes a method of generating an image scanning clock signal for an optical scanning device. The method described in US 5,014,137 generates a plurality of clock signals which are out of phase with a reference clock signal, and one of the out of phase clock signals is selected in an attempt to produce an image scanning clock signal which is correctly synchronised with the image data and scanning device. However, the method described in US 5,014,137 uses high speed clock sources that are multiples of the frequency of the reference pulse. Unfortunately, there are several disadvantages associated with the use of high speed clock sources.

Firstly, the components required to generate such high frequency signals tend to be complex, which can result in increased manufacturing costs. Furthermore, the presence of high speed clock sources can cause radio frequency interference and electro-magnetic compatibility problems, resulting in malfunction of the scanner. These problems can be greater as the frequency of the reference pulse increases and/or a greater degree of synchronisation accuracy is required, thereby limiting the system's usefulness in high speed scanning systems. This complexity, again, can make manufacture of a system based upon that method costly. Whilst the high speed clock method can minimise errors in scanning systems where the reference clock has a relatively low frequency and where only a few phase shifted clocks are generated, the method is not well suited to image scanning systems where the reference pulse is of a higher frequency (e.g. 40 to 50 MHz, 20 to 25ns period). A higher frequency means that a finer resolution of image can be produced.

There is therefore a need for a system which provides accurate synchronisation at high resolution of image data to an image scanning mechanism, where the reference pulse has a relatively high frequency, which, preferably, includes no high frequency clock signal generators with their associated costs and problems.

According to a first aspect of the present invention, there is provided a clock signal generator comprising:
delay means configured to receive a first clock signal and to apply respective delays thereto to provide a plurality of tap signals, each said tap signal delayed in respect of said first clock signal;
analyser means for selecting one of said tap signals which is closest to or in synchronisation with a second clock signal; and
output means for generating a third clock signal corresponding to said selected tap signal,
   wherein said analyser means includes an offset means configured to offset a first edge of said third clock signal from a synchronising edge of said second clock signal by a predetermined period of time.

Preferably, the offset means includes at least one delay counter means configured to count a predetermined number of cycles of said first clock signal before enabling said output means to generate said third clock signal.

Preferably, a first of said tap signals is delayed in respect of said first clock signal and each subsequent said tap signal has an incremental delay from previous said tap signal.

Preferably, said analyser means sequentially scans said plurality of tap signals. The analyser means may select one of the tap signals with a first rising edge transition.

Preferably, said delay counter means includes two counter means configured to count cycles clocked off opposite phases of said first clock signal.

Preferably, an OR operation is performed on outputs of said two delay counter means. Preferably, the second clock signal is received from an image scanning system. Preferably, the analyser means further includes noise suppression means. Preferably, the noise suppression means is configured to scan for two consecutive said tap signals with low outputs and then scan for two consecutive said tap signals with high outputs.

Preferably, said first clock signal, said third clock signal and said plurality of tap signals are all of substantially equal frequency.

According to a second aspect of the present invention there is provided an image scanning system incorporating a clock generator according to the first aspect of the invention.

According to a third aspect of the present invention there is provided a Very Large Scale Integration chip comprising a clock signal generator according to the first aspect of the invention.

According to a fourth aspect of the present invention there is provided a method of generating a clock signal, said method comprising steps of:
receiving a first clock signal;
generating a plurality of tap signals, each said tap signal synchronised with or delayed in respect of said first clock signal; and
selecting one of said tap signals which is closest to or in synchronisation with a second clock signal; and
generating a third clock signal corresponding to said selected tap signal such that a first edge or said third clock signal is offset from a synchronising edge of said second clock signal by a predetermined period of time. Preferably, the step generating said third clock signal comprises counting a predetermined number of cycles of said first clock signals.

Preferably, a first of said tap signals is delayed in respect of said first clock signal, and each subsequent tap signal has an incremental delay from previous said tap signal.

Preferably, said step of selecting one of said tap signals comprises sequentially scanning said plurality of tap signals. Preferably, said selection step comprises selecting one of said tap signals with a first rising edge transition.

Preferably, the method further comprises steps of:
scanning for two consecutive said tap signals with low outputs;
scanning for two consecutive said tap signals with high outputs; and
selecting a first of said two consecutive tap signals with high output.

The step or generating said third clock signal may comprise:
counting said predetermined number of cycles of said first clock signal clocked off a first phase of said signal; and
counting said predetermined number of cycles of said first clock signal clocked off an opposite phase of said first clock signal.

Preferably, the method may further comprise a step of:
performing an OR operation on outputs of two said clock cycle counts.

Preferably, the second clock signal is received from an image scanning system.

According to a fifth aspect of the present invention there is provided a Flexible Programmable Gate Array configured to function as a clock signal generator in accordance with the first aspect of the invention.

Whilst the invention has been described above, it extends to any inventive combination of the features set out above or in the following description.

The invention may be performed in various ways, and, by way of example only, an embodiment thereof will now be described by way of example only, reference being made to the accompanying drawings, in which:

The invention may be performed in various ways and, by way of example only, a specific embodiment thereof will now be described, reference being made to the accompanying drawings, in which:
Figure 1 comprises a block diagram of a scanning mechanism used with a synchroniser unit in accordance with a preferred embodiment of the present invention;
Figure 2 comprises a block diagram of the components included in the synchroniser identified in Figure 1;
Figure 3 illustrates schematically a flow diagram of the steps performed by the components of the synchroniser unit; and
Figure 4 illustrates graphically the clock signals used to generate correctly positioned image data by the prererred embodiment.

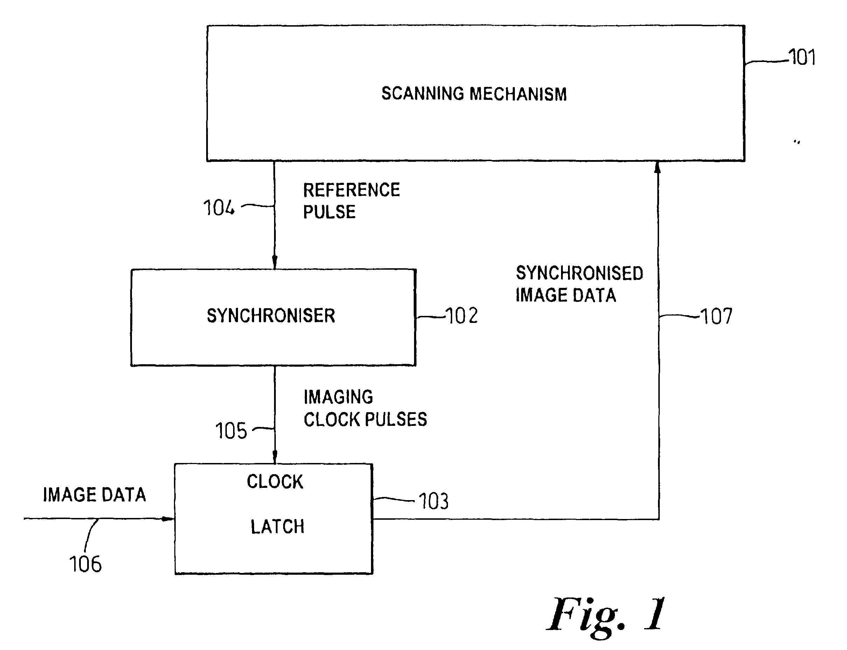

In Figure 1, a scanning mechanism 101 is shown as transmitting a reference pulse 104 to a synchroniser unit 102. The synchroniser 102 may be a separate device connected between the scanning mechanism 101 and a source (e.g. a personal computer) of image data to be used by the scanning mechanism. Alternatively, the synchroniser 102 may be built into the scanning mechanism.

The synchroniser 102 is intended to receive the reference pulse 104 and to output imaging clock pulses 105, representing clock signals which are correctly synchronised with the scanner mechanism for producing accurate images.

The imaging clock pulses 105 are transmitted to a latch 103. The latch 103 also receives image data signals 106 from the image data source device. The latch 103 is arranged such that the image data at least is stored until the imaging clock pulses 105 are received. When the imaging clock pulses 105 are received, the latch outputs image data 106 as correctly positioned image data signals 107, which are received by the scanning mechanism 101. The image data 107 is intended to be substantially synchronised with reference pulse 104 and output at the correct time such that it will be received by the scanning mechanism when the head of the mechanism is in the correct position for outputting the physical image elements corresponding to the image data, thereby producing an accurate image.

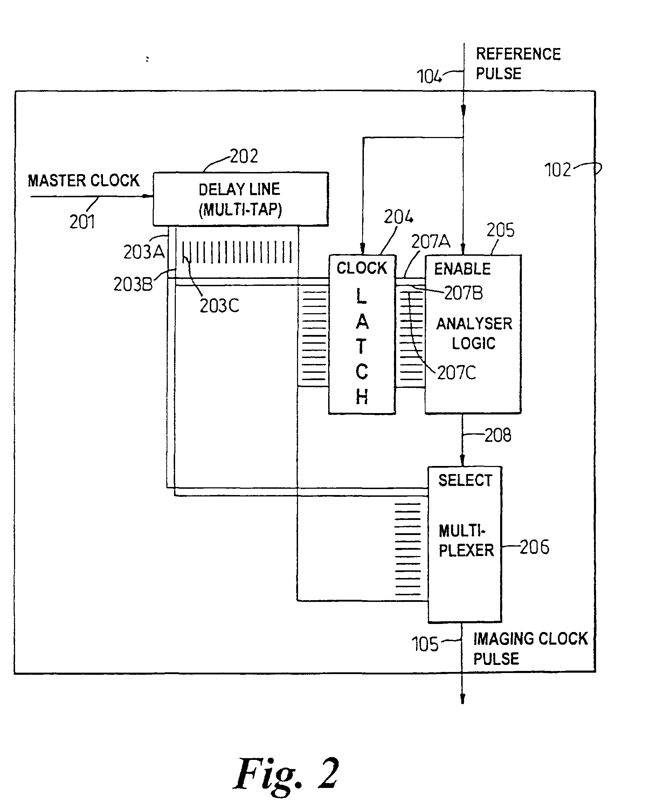

Figure 2 of the accompanying drawings illustrates schematically the components (preferably) included in the synchroniser 102. The synchroniser 102 receives a master clock pulse 201. The clock signal generator which produces the master clock pulse 201 may be included in the synchroniser 102, or may be a separate component. The master clock signal 201 comprises timing intervals substantially equal to the image data timing on the scanning mechanism. The timing intervals may be of constant frequency or of variable frequency, according to the needs of the scanning mechanism.

A primary function of the synchroniser 102 is to introduce a phase shift to the master clock signal 201 such that the imaging clock signal 105 produced repeatedly aligns with a synchronising edge of the reference pulse 104. In practice, on virtually each occasion that the reference pulse 104 occurs, a different amount of phase shift must be introduced to the master clock signal 201 in order to produce alignment between the reference pulse 104 and the imaging clock signal 105. A finite time interval can displace the imaging clock signal 105 from the reference pulse 104, but as long as this interval is constant, it does not invalidate the synchronising operation.

The master clock pulse 201 is fed into a delay line (or multi-tap) generator 202. The delay line 202 is configured to generate a plurality of output pulses 203A, 203B, 203C,...herein referred to as "tap" signals. Each of the tap signals output from delay line 202 may either be synchronised with master clock signal 201 or delayed in time in respect of the master clock signal 201. In the preferred embodiment, a first (203A) of the tap signals is delayed in respect of master clock signal 201 and each subsequent tap signal (203B, 203C, etc) is delayed in respect of the previous tap signal (203A, 203B, etc, respectively). Thus, the tap signals output from delay line 202 represent a series of increasingly delayed versions of the master clock signal 201.

In the preferred embodiment, the total time delay of the delay line 202 (i.e. a period of time from receiving its input signals to outputting a final one of the plurality of tap signals) is greater than a single period of the master clock signal 201. Although in the preferred embodiment the tap signals are substantially equally spaced, this is not always mandatory. The delay between each of the plurality of tap signals represents a resolution of the synchroniser operation. With very small delays the resolution can be very fine. In a typical implementation of the preferred embodiment, this delay can be between one and four ns seconds, and preferably two ns. This would be equivalent to a 500 MHz clock period. Longer delays make for coarser resolution. However, since the aggregate of all the tap delays must be greater than a period of the master clock, several tap signals must be included in the synchroniser. By selecting the silicon implementation technology and chip layout it is possible to vary the resolution to suit requirements of the scanning mechanism.

The tap signals 203A, 203B, 203C,... are transmitted to a latch device 204 and also to a multiplexer 206. Latch 204 also receives reference pulse 104 from the scanning mechanism and is arranged to output a plurality of signals 207A, 207B, 207C,...corresponding to its input signals when the reference pulse is received.

Output lines of latch 204 are connected to analyser logic 205. Analyser logic 205 also includes an enable terminal, intended to receive reference pulse 104. Analyser logic is configured to select one of the tap signals received from latch 204 in accordance with steps described herein below, and output a selection signal 208 to multiplexer 206. Multiplexer 206 uses the signal 208 to output the selected tap signal as the imaging clock signal 105.

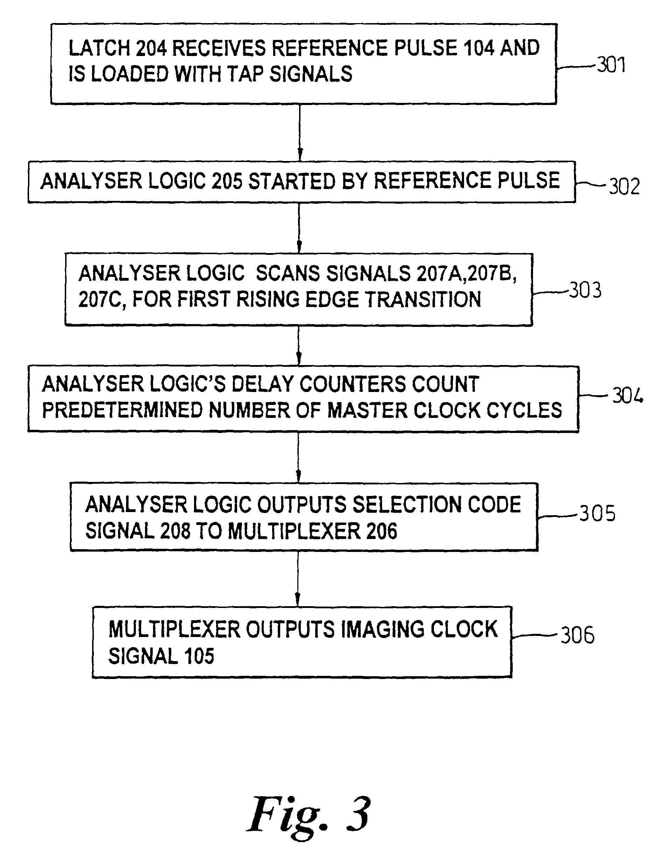

Figure 3 of the accompanying drawings illustrates a flow chart describing operation of the synchroniser 102 in accordance with the preferred embodiment. It will be appreciated by those skilled in the art that steps 301 to 306 of Fig.3 are merely examples of how the synchroniser 102 may operate and that some of the steps may be performed in a different order or simultaneously to achieve a similar functionality.

At step 301, latch 204 receives the reference pulse 104 at its clock terminal. The synchronising edge of the reference pulse causes latch 204 to be loaded with the tap signals 203A, 203B, 203C,...from delay line 202. Following the loading operation, the latch can output tap signals 207A, 207B, 207C..., corresponding to its input signals (which represent the state of the tap signals at the synchronising instant, i.e. when the reference pulse occurs) and transmits signals 207A, 207B, 207C,...to analyser logic 205. At step 302, the analyser logic 205 receives reference pulse 104 at its enable terminal, thereby starting analysis of signals 207A, 207B, 207C,...

At step 303, analyser logic 205 sequentially scans tap signals 207A, 207B, 207C,... for the signal having a first rising edge transition. This scan effectively finds the tap signal which is in synchronisation, or closest to synchronisation, with the reference pulse 104. As the analyser logic performs a sequential scan without tight timing constraints, it can be feasible to incorporate noise suppression logic in its edge recognition circuit so that any unstable latch outputs caused by input set-up time violations can be ignored. Once such means of noise suppression logic comprises scanning for two consecutive tap signals with low outputs, then proceeding to scan from that point, seeking two consecutive tap signals with high outputs. From the point where two consecutive high outputs have been detected, the analyser steps back one tap to select the tap signal with the first of the two consecutive high outputs. Analyser logic 205 is preferably configured to output a selection signal 208, which is a code (e.g represented by a binary number) corresponding to the selected input signal having the first rising edge transition.

Operation of the analyser circuit 205 takes an appreciable period of time, so it is important that the imaging clock signal 105 output by the synchroniser 102 is suppressed until the analyser logic has completed its operation and the multiplexer 206 has settled. For this purpose, the analyser circuit 205 incorporates an offset means which is intended to offset a first edge of the imaging clock signal from a synchronising edge of the reference pulse. The offset means preferably comprises at least one delay counter clocked from the master clock. At step 304, the delay counters of the offset means count a predetermined number of master clock cycles before the selection signal 208 is transmitted to multiplexer 206.

As the timing differences between the phase of master clock signal 201 and the synchronising pulse 104 can vary, the synchroniser 102 is intended to be able to deal with all such relevant timing displacements. It is a characteristic of switching logic that there are small periods of uncertainty due to switching and transition delays, and race conditions, which can cause metastability. If the analyser circuit 205 fails to correctly discriminate the master clock edge for delay counter operation, then an occasional displacement of the imaging clock signal 105 by a master clock period can occur, causing an equivalent displacement of the image data on the scanning mechanism.

In order to reduce the likelihood of this occurring, rather than just having one delay counter clocked from the master clock, the analyser circuit 205 preferably includes two such counters. Both counters are intended to count an equal number of master clock cycles, but each counter is clocked off opposite phases of the master clock. The carry outputs (corresponding to the end of the counter delay period) of both the delay counters are ORed together, and if the resulting output indicates that the predetermined number of master clock cycles have passed, then selection signal 208 is transmitted at step 305. This use of two delay counters is intended to guarantee that even if one of the counters is caught in the uncertainty period and is unable to correctly discriminate the master clock edge, the other delay counter should be able to correctly discriminate the edge.

At step 306, after multiplexer 206 has received the selection signal 208, the multiplexer outputs one of the delayed signals 203A, 203B, 203C,...(i.e. the tap signal indicated by the selection code) as imaging clock signal 105.

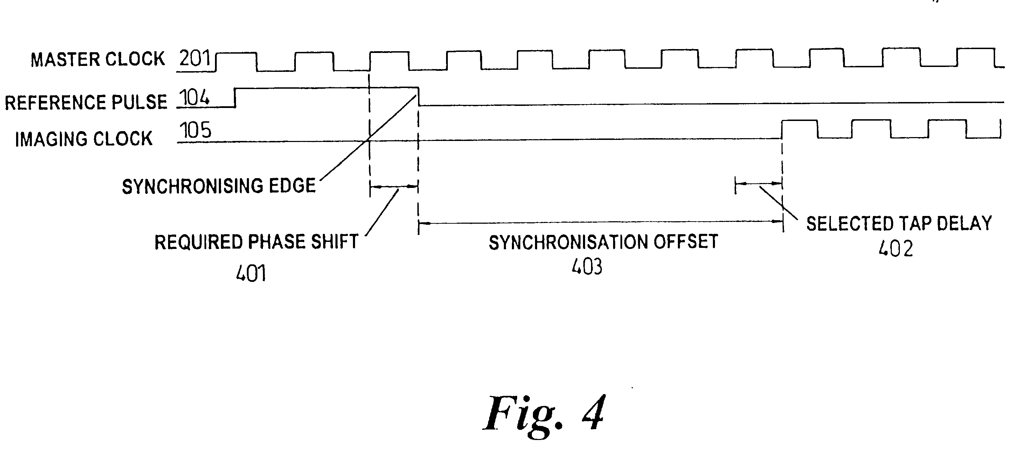

In Figure 4 of the accompanying drawings, there is shown an example of how the imaging clock 105 may be used to delay image data in order that it is substantially synchronised with the reference pulse in order to produce an accurate image.

In Figure 4, the reference pulse 104 is shown as occurring after a first cycle of master clock 201 has started. A phase shift which is required for master clock signal 201 to be synchronised with the reference pulse is denoted by line 401. The required phase shift 401 has a length which spans from a first edge of a cycle of a master clock 201 pulse to a synchronising edge (high to low transition) of reference pulse 104. The delay of a tap signal which is selected for synchronisation by the analyser means is illustrated by line 402. The delay of selected tap signal 402 is substantially equal to the required phase shift 401. The selected tap delay 402 is intended to ensure that the synchronisation offset (denoted by line 403) is maintained at an exact number of master clock cycles, that is, the synchronisation offset is a constant (predetermined) period of time. A first edge (low to high transition) of the resulting imaging clock signal 105 occurs at the end of the synchronisation offset interval.

The synchroniser described herein above is well suited to implementation in a Very Large Scale Integration (VLSI) chip. Furthermore, it can be also realised using Field Programmable Gate Array (FPGA) technology. The delay line 202 can readily be built in silicon, and this implementation means that the output signals 203A, 203B, 203C,... can have a very fine resolution (i.e very small incremental delays between each output signal). Although absolute accuracy and long term stability of silicon delay lines are not ideal, for the purpose of the synchroniser, these are not critical factors. A silicon chip layout can easily provide a high degree of connectivity between the delay line elements, latch 204 and multiplexer 206. Monolithic implementation within a single chip allows tight control of relevant propagation delays, making the chip highly reliable.

## Claims

1. A clock signal generator comprising:
delay means configured to receive a first clock signal and apply respective delays thereto to provide a plurality of tap signals, each said tap signal delayed in respect of said first clock signal;
analyser means for selecting one of said tap signals which is closest to or in synchronisation with a second clock signal; and
output means for generating a third clock signal corresponding to said selected tap signal,
wherein said analyser means includes offset means configured to offset a first edge of said third clock signal from a synchronising edge of said second clock signal by a predetermined period of time.

2. A clock signal generator according to Claim 1, wherein said offset means includes at least one delay counter means configured to count a predetermined number of cycles of said first clock signal before enabling said output means to generate said third clock signal, and/or a first of said tap signals is delayed in respect of said first clock signal and each subsequent said tap signal has an incremental delay from previous said tap signal, and/or said analyser means sequentially scans said plurality of tap signals.

3. A clock signal generator according to Claim 2, wherein said analyser means selects one of said tap signals with a first rising edge transition, and/or said offset means includes two said delay counter means, each said delay counter means configured to count cycles clocked off opposite phases of said first clock signal, and preferably an OR operation is performed on outputs of said two delay counter means.

4. A synchroniser unit according to any one of the preceding claims, wherein said second clock signal is received from an image scanning system, said analyser means further includes noise suppression means, and wherein said noise suppression means is preferably configured to scan for two consecutive said tap signals with low outputs and then scan for two consecutive said tap signals with high outputs.

5. A clock signal generator according to any one of the preceding claims, wherein said first clock signal, said third clock signal and said plurality of tap signals are all of substantially equal frequency.

6. An image scanning system incorporating a clock signal generator according to any one of Claims 1 to 5.

7. A Field Programmable Gate Array configured to function as a clock signal generator in accordance with any one of claims 1 to 5.

8. A method of generating a clock signal, said method comprising steps of:
receiving a first clock signal;
generating a plurality of tap signals, each said tap signal delayed in respect of said first clock signal;
selecting one of said tap signals which is closest to or in synchronisation with a second clock signal; and
generating a third clock signal corresponding to said selected tap signal such that a first edge of said third clock signal is offset from a synchronising edge of said second clock signal by a predetermined period of time.

9. A method according to Claim 8, wherein said step of generating said third clock signal comprises counting a predetermined number of cycles of said first clock signal, and/or a first of said tap signals is delayed in respect of said first clock signal and each subsequent tap signal has an incremental delay from previous said tap signal and/or said step of selecting one of said tap signals comprises sequentially scanning said plurality of tap signals, and/or said selection step comprises selecting one of said tap signals with a first rising edge transition, and optionally further comprising steps of:
scanning for two consecutive said tap signals with low outputs;
scanning for two consecutive said tap signals with high outputs; and
selecting a first of said two consecutive tap signals with high output.

10. A method according to any one of Claims 8 to 9, wherein said step of generating said third clock signal comprises:
counting a predetermined number of cycles of said first clock signal clocked off a first phase of said signal; and
counting a predetermined number of cycles of said first clock signal clocked off an opposite phase of said first clock signal, and preferably further comprising a step of:
performing an OR operation on outputs of two said clock cycle counts.

11. A method according to any one of Claims 8 to 10, wherein said second clock signal is received from an image scanning system.

12. A Very Large Scale Integration chip comprising a clock signal generator according to any one of Claims 1 to 5.
